# EUROPÄISCHE PATENTSCHRIFT

(11) **EP 0 345 579 B1**
(45) Veröffentlichungstag und Bekanntmachung des Hinweises auf die Patenterteilung: **21.07.1993**
(21) Anmeldenummer: 89109609.1
(22) Anmeldetag: 27.05.1989
(51) Int. Cl.: C08G 73/06

(54) **Verfahren zur Herstellung von oligomerem 2,2,4-Trimethyl-1,2-dihydrochinolin**
Method for the preparation of oligomers of 2,2,4-trimethyl-1,2-dihydroquinoline
Procédé de préparation d'oligomères de 2,2,4-triméthyl-1,2-dihydroquinoléine

(30) Priorität: 10.06.1988 DE 3819776
(43) Veröffentlichungstag der Anmeldung: 13.12.1989
(73) Patentinhaber: BAYER AG, 51368 Leverkusen (DE)
(72) Erfinder: Blazejak, Manfred, Dr., D-4000 Düsseldorf 1 (DE); Wemmje, Karl Johann, D-5093 Burscheid (DE); Hammer, Heinz, Dr., D-5060 Bergisch-Gladbach 2 (DE)

(56) Entgegenhaltungen:
- DE-A- 3 028 322
- GB-A- 2 054 595
- CHEMICAL ABSTRACTS, Band 79, Nr. 5, 6. August 1973, Seite 445, Zusammenfassung Nr. 31929v, Columbus, Ohio, US; & JP-A-73 11 103
- CHEMICAL ABSTRACTS, Band 110, Nr. 20, 15. Mai 1989, Seite 85, Zusammenfassung Nr. 174932k, Columbus, Ohio, US;

## Beschreibung

Die vorliegende Erfindung betrifft ein Verfahren zur Herstellung von oligomerem 2,2,4-Trimethyl-1,2-dihydrochinolin (= oligomeres TMQ) aus monomerem 2,2,4-Trimethyl-1,2-dihydrochinolin (= monomeres TMQ) durch Erhitzen in Gegenwart von Säure.

Oligomeres TMQ ist ein wichtiges Antioxidationsmittel für Kautschuk, wobei sich gemäß der JP-OS 145854/1978 Produkte mit hohem Dimerenanteil durch eine verbesserte Wirkung auszeichnen.

Gemäß der DE-OS 3 028 322 ist es bekannt, oligomeres TMQ mit hohem Dimerenanteil mit Hilfe von Salzsäure als Katalysator herzustellen, wobei die Konzentration der Salzsäure im Reaktionsgemisch 15 bis 25 Gew.-% betragen muß. Nachteilig bei diesem Verfahren ist, daß eine hohe Menge an Salzsäure zu verwenden ist und, daß diese Salzsäure in Neutralisations- und Waschprozessen aus dem Produkt wieder entfernt werden muß. Das Verfahren ist umständlich und verursacht besonderen Aufwand auch bei der Aufarbeitung der Abwässer.

Es wurde nun ein Vefahren zur Herstellung von oligomerem 2,2,4-Trimethyl-1,2-dihydrochinolin aus monomerem 2,2,4-Trimethyl-1,2-dihydrochinolin gefunden, das dadurch gekennzeichnet ist, daß man monomeres 2,2,4-Trimethyl-1,2-dihydrochinolin (TMQ) unter Zusatz von 0,01 bis 10 Gew.-% einer mehrbasischen aliphatischen Carbonsäure (bezogen auf monomeres TMQ) und unter Zusatz der 0,1-bis 3-fachen Gewichtsmenge Wasser (bezogen auf die mehrbasische aliphatische Carbonsäure) auf 80 bis 180°C erhitzt.

In das erfindungsgemäße Verfahren kann auf beliebige Weise hergestelltes rohes oder gereinigtes monomeres 2,2,4-Trimethyl-1,2-dihydrochinolin (= monomeres TMQ) eingesetzt werden Geeignet ist z.B. rohes oder gegebenenfalls durch Destillation gereinigtes monomeres TMQ, das in bekannter Weise durch Umsetzung von Anilin mit Aceton, Diacetonalkohol oder Mesityloxid erhalten worden ist (siehe z.B. JP-OS 40661/1980).

Es ist bevorzugt, monomeres TMQ in das erfindungsgemäße Verfahren einzusetzen, das einen Gehalt an TMQ von über 50 Gew.-%, besonders bevorzugt von über 80 Gew.-%, insbesondere von über 90 Gew.-%, aufweist Als sonstige Komponenten können im eingesetzten monomeren TMQ beispielsweise Anilin und/oder zu monomerem TMQ isomere Verbindungen vorhanden sein.

Eine besondere Ausführungsform des erfindungsgemäßen Verfahrens besteht darin, daß man monomeres TMQ einsetzt, das erhalten worden ist, indem man Anilin mit Aceton in Toluol als Lösungsmittel und unter Zusatz von p-Toluolsulfonsäure als Katalysator bei Sumpftemperaturen von 110 bis 150°C umsetzt, wobei man Anilin, Toluol und den Katalysator vorlegt, das Gemisch bis zum Sieden des Toluols am Rückfluß erhitzt, dann beginnt Aceton einzutragen, nach Beginn der Reaktion - erkennbar an der Wasserabspaltung - sich bildendes Reaktionswasser als azeotropes Gemisch mit Toluol abdestilliert und weiteres Aceton so zudosiert, wie es verbraucht wird.

Ein wesentliches Merkmal der vorliegenden Erfindung ist die Verwendung einer mehrbasischen aliphatischen Carbonsäure als Katalysator. Geeignete Katalysatoren sind beispielsweise solche der Formel (I) 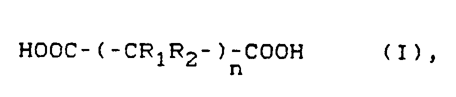
in der
- R₁: für Waserstoff oder OH,
- R₂: für Wasserstoff oder COOH und
- n: für eine ganze Zahl von 0 bis 4 stehen.

Sofern in Formel (I) mehrere -(-CR₁R₂-)-Gruppen vorkommen (n >1), können diese untereinander gleich oder verschieden sein. Liegen z.B. zwei derartige Gruppen vor, so kann es sich dabei z.B. um zwei CH₂-Gruppen, um eine CH₂- und eine H-C-OH-Gruppe oder um eine CH₂- und eine HO-C-COOH-Gruppe handeln.

Bevorzugte Katalysatoren sind Oxalsäure, Maleinsäure, Bernsteinsäure, Weinsäure und Zitronensäure. Besonders bevorzugt ist Oxalsäure. Man kann auch Gemische von zwei oder mehr mehrbasischen aliphatischen Carbonsäuren als Katalysator einsetzen.

Bei den mehrbasischen aliphatischen Carbonsäuren kann es sich auch um ungesättigte Säuren handeln, beispielsweise um Fumarsäure.

Bezogen auf das eingesetzte monomere TMQ wird der erfindungsgemäß zu verwendende Katalysator in Mengen von 0,01 bis 10 Gew.-% eingesetzt. Vorzugsweise beträgt diese Menge 0,1 bis 5 Gew.-%.

Das erfindungsgemäße Verfahren wird in Gegenwart von bestimmten Mengen Wasser durchgeführt. Wasser kann z.B. in Form von Kristallwasser mit der einzusetzenden mehrbasischen aliphatischen Carbonsäure in das Reaktionsgemisch eingebracht werden, es kann auch, gegebenenfalls zusätzlich, als solches dem Reaktionsgemisch zugesetzt werden Wasser ist erfindungsgemäß in Gewichtsmengen vom 0,1 bis 3-fachen, bezogen auf die eingesetzte mehrbasische aliphatische Carbonsäure, zugegen sein Vorzugsweise beträgt diese Menge das 0,5- bis 2,5-fache.

Das erfindungsgemäße Verfahren wird bei Temperaturen im Bereich von 80 bis 180°C durchgeführt. Temperaturen im Bereich von 100 bis 150°C sind bevorzugt. Im allgemeinen führt man das erfindungsgemäße Verfahren bei Normaldruck durch. Man kann aber auch bei erniedrigtem oder erhöhtem Druck arbeiten, beispielsweise bei 10 mbar bis 5 bar. Das erfindungsgemäße Verfahren kann ansatzweise (z.B. in einem Rührkessel) oder kontinuierlich (z.B. in einem Röhrenreaktor) durchgeführt werden. Die erfindungsgemäße Umsetzung ist normalerweise nach einer Reaktionszeit von 1 bis 20 Stunden beendet, wobei im allgemeinen größere Mengen an mehrbasischen aliphatischen Carbonsäuren relativ kurze Reaktionszeiten bedingen.

Nach Beendigung der Oligomerisierungsreaktion kann man das Reaktionsgemisch z.B. so aufarbeiten, daß man nicht umgesetztes monomeres TMQ bei Drucken im Bereich von 1000 bis 1 mbar und Sumpftemperaturen bis zu 220°C abdestilliert. Dabei zersetzt sich der eingesetzte Katalysator zu unter Destillationsbedingungen gasförmigen Verbindungen (z.B. CO₂, CO und H₂O). Es hinterbleibt dann oligomeres TMQ, das frei von störenden Bestandteilen ist und über 50 Gew.-%, häufig über 60 Gew.-%, dimeres TMQ enthält Das abdestillierte monomere TMQ kann in die Herstellung von oligomerem TMQ zurückgeführt werden.

Nach der erfindungsgemäßen Herstellung von oligomeren TMQ kann man dieses auch so aus dem Reaktionsgemisch isolieren, daß man ein aromatisches Lösungsmittel, z.B. Toluol oder Xylol, und Wasser zusetzt, nach intensiver Durchmischung die organische Phase abtrennt, daraus im Vakuum das aromatische Lösungsmittel und monomeres TMQ direkt und als Rückstand oligomeres TMQ erhält.

Bei einer besonders bevorzugten Ausführungsform des erfindungsgemäßen Verfahrens wird wie folgt verfahren: Monomeres TMQ wird mit insgesamt 0,5 bis 5 Gew.-% wasserfreier Oxal-, Malein-, Bernstein-, Wein- und/oder Zitronensäure in Gegenwart der 0,8 bis 2-fachen Gewichtsmenge Wasser versetzt (bezogen auf eingesetzte Säure) und 4 bis 12 Stunden unter Rühren am Rückfluß gekocht. Danach wird bei einem Druck von 200 bis 1 mbar und Sumpftemperaturen bis 220°C unumgesetztes monomeres TMQ abdestilliert und aufgefangen. Gleichzeitig werden die sich aus dem eingesetzten Katalysator gebildeten, unter Destillationsbedingungen gasförmigen Zersetzungsprodukte aus dem Reaktionsgemisch abgezogen. Der verbleibende Destillationsrückstand eignet sich, gegebenenfalls nach einer Filtration und Konfektionierung, besonders gut zur Verwendung als Antioxidationsmittel für Kautschuk.

Das erfindungsgemäße Verfahren hat eine Reihe von Vorteilen. Es liefert oligomeres TMQ mit hohen Anteilen an dimerem TMQ. Solches oligomere TMQ ist besonders zur Verwendung als Antioxidationsmittel für Kautschuk geeignet. Weiterhin können im erfindungsgemäßen Verfahren geringere Mengen an Katalysatoren eingesetzt werden als bisher, wobei die erfindungsgemäß zu verwendenden Katalysatoren nach Durchführung des Verfahrens auf einfache Weise, ohne Neutralisations- und/oder Waschvorgänge, entfernt werden können. Eventuell im oligomeren TMQ verbleibende Spuren der eingesetzten Katalysatoren stören die Verwendbarkeit des oligomeren TMQ nicht. Mit dem erfindungsgemäßen Verfahren werden im Vergleich zum Verfahren der DE-OS 30 28 322 reinere Produkte erhalten. Es ist ausgesprochen überraschend, daß mit dem erfindungsgemäßen Verfahren so gute Ergebnisse erzielt werden können, da mehrbasische aliphatische Carbonsäuren deutlich schwächere Säuren sind als die bisher verwendete Salzsäure und eine Abhängigkeit der Ausbeute an oligomerem TMQ vom Wassergehalt der Reaktionsmischung bisher nicht bekannt war.

### Beispiele

### Beispiel 1

In einem Rührkolben mit Destillationsaufsatz und Wasserabscheider wurden 130 Gew.-Teile Anilin, 50 Gew,-Teile Toluol und 2 Gew.-Teile p-Toluolsulfonsäure vorgelegt und der Ansatz bis zum Rückfluß des Toluols erhitzt. Dann wurden 160 Gew.-Teile Aceton langsam zudosiert, während gleichzeitig das entstandene Reaktionswasser mit dem siedenden Toluol ausgekreist und über den Wasserabscheider abgetrennt wurde. Nach Beendigung der Zugabe des Acetons wurde solange nachgerührt, bis kein Wasser mehr abgeschieden wurde.

Danach wurde zuerst nicht umgesetztes Aceton und Toluol und anschließend im Vakuum nicht umgesetztes Anilin und gebildetes monomeres TMQ abdestilliert. Es hinterblieb eine geringe Menge eines harzartigen Rückstandes, der auch p-Toluolsulfonsäure enthielt.

Die abdestillierten Mengen Aceton, Toluol und Anilin, sowie der harzartige Rückstand wurden in die nächste Partie wieder eingesetzt. Die Ausbeute an monomerem TMQ betrug 73,0 % d. Th., bezogen auf eingesetztes Anilin.

100 Gew.-Teile des so erhaltenen monomeren TMQ wurden in einem Rührkolben mit Destillationsaufsatz mit 2 Gew.-Teilen wasserfreier Oxalsäure und 2 Gew.-Teilen Wasser versetzt und am Rückfluß 6 Stunden bei 120°C verrührt.

Danach wurde bei einem Druck von 5 mbar bis zu einer Sumpftemperatur von 220°C nicht umgesetztes monomeres TMQ abdestilliert, wobei sich die Oxalsäure praktisch vollständig zu CO₂, CO und Wasser zersetzte. Diese Substanzen wurden gasförmig mit dem Vakuum abgezogen.

Der im Kolben verbliebene harzartige Rückstand bestand aus oligomerem TMQ. Die Ausbeute an oligomerem TMQ betrug 55,8 % d. Th., bezogen auf eingesetztes monomeres TMQ. Das abdestillierte monomere TMQ wurde bei der nächsten Partie wieder eingesetzt.

Das so erhaltene oligomere TMQ hatte einen Gehalt an dimerem TMQ von 58,6 Gew.-%. Es erwies sich als wesentlich reiner als oligomeres TMQ, das gemäß der DE-OS 30 28 322 hergestellt wurde. Das HPLC-Spektrum des gemäß der DE-OS 30 28 322 hergestellten oligomeren TMQ's wies wesentlich mehr und intensivere Banden auf als das HPLC-Spektrum des gemäß dem vorliegenden Beispiel erhaltenen oligomeren TMQ's.

### Beispiel 2

Es wurde gearbeitet wie in Beispiel 1, jedoch wurden 100 Gew.-Teile monomeres TMQ zusammen mit 5 Gew.-Teilen Zitronensäure und 5 Gew.-Teilen Wasser eingesetzt und am Rückfluß 12 Stunden bei 120°C erhitzt. Nach der Aufarbeitung wurden 52,3 Gew.-Teile eines besonders reinen oligomeren TMQ erhalten.

### Beispiel 3 (zum Vergleich - ohne Wasser)

Es wurde gearbeitet wie in Beispiel 1, jedoch ohne Wasserzusatz. Nach der Aufarbeitung betrug die Ausbeute an oligomerem TMQ 20,6 Gew.-Teile.

### Beispiel 4 (zum Vergleich - mit viel Wasser)

Es wurde gearbeitet wie in Beispiel 1, jedoch wurden 10 Gew.-Teile Wasser eingesetzt. Nach der Aufarbeitung betrug die Ausbeute an oligomerem TMQ 25,8 Gew.-Teile.

### Beispiel 5

100 Gew.-Teile des gemäß Beispiel 1 erhaltenen monomeren TMQ wurden in einem Rührkolben mit Destillationsaufsatz mit 6 Gew.-Teilen kristallwasserhaltiger Oxalsäure und 3 Gew.-% Teilen Wasser versetzt und am Rückfluß 6 Stunden bei 120-140°C verrührt.

Danach wurde der Ansatz mit 150 Gew.-Teilen Toluol versetzt und zweimal mit 50 Gew.-Teilen Wasser ausgewaschen.

Die organische Phase - enthaltend Toluol, monomeres und oligomeres TMQ - wurde nun im Vakuum in einem Abtreiber erhitzt und Toluol und monomeres TMQ vom Rückstand entfernt. Dieser bestand aus oligomerem TMQ. Die Ausbeute betrug 64,8 %, bezogen auf eingesetztes monomeres TMQ.

### Beispiel 6

Es wurde gearbeitet wie in Beispiel 5, jedoch wurden dem Ansatz nach der Oligomerisation als Lösungsmittel Xylol, Wasser und zusätzlich 1 Gew.-Tl. Soda zugesetzt. Die Mischung wurde verrührt, nach dem Absitzen die wäßrige Phase abgetrennt, die organische Phase mit Wasser nachgewaschen und wie in Beispiel 5 beschrieben aufgearbeitet.

Die Ausbeute an oligomeren TMQ betrug 59,6 % d. Th., bezogen auf eingesetztes monomeren TMQ.

## Patentansprüche

1. Verfahren zur Herstellung von oligomerem 2,2,4-Trimethyl-1,2-dihydrochinolin aus monomerem 2,2,4-Trimethyl-1,2-dihydrochinolin, dadurch gekennzeichnet, daß man monomeres 2,2,4-Trimethyl-1,2-dihydrochinolin (TMQ) unter Zusatz von 0,01 bis 10 Gew.-% einer mehrbasischen aliphatischen Carbonsäure (bezogen auf monomeres TMQ) und unter Zusatz der 0,1- bis 3-fachen Gewichtsmenge Wasser (bezogen auf die mehrbasische aliphatische Carbonsäure) auf 80 bis 180°C erhitzt.

2. Verfahren nach Anspruch 1, dadurch gekennzeichnet, daß man monomeres 2,2,4-Trimethyl-1,2-dihydrochinolin einsetzt, das erhalten worden ist, indem man Anilin mit Aceton in Toluol als Lösungsmittel und unter Zusatz von p-Toluolsulfonsäure als Katalysator bei Sumpftemperaturen von 110 bis 150°C umsetzt, wobei man Anilin, Toluol und den Katalysator vorlegt, das Gemisch bis zum Siedes des Toluols am Rückfluß erhitzt, dann beginnt Aceton einzutragen, nach Beginn der Reaktion sich bildendes Reaktionswasser als azeotropes Gemisch mit Toluol abdestilliert und weiteres Aceton so zudosiert, wie es verbraucht wird.

3. Verfahren nach Ansprüchen 1 und 2, dadurch gekennzeichnet, daß die eingesetzte mehrbasische aliphatische Carbonsäure der Formel (I) entspricht 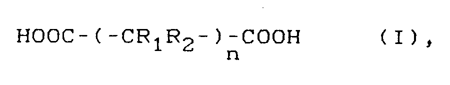 in der
R₁ für Waserstoff oder OH,
R₂ für Wasserstoff oder COOH und
n für eine ganze Zahl von 0 bis 4 stehen.

4. Verfahren nach Ansprüchen 1 und 2, dadurch gekennzeichnet, daß eine ungesättigte mehrbasische aliphatische Carbonsäure eingesetzt wird.

5. Verfahren nach Ansprüchen 1 bis 4, dadurch gekennzeichnet, daß es sich bei der mehrbasischen aliphatischen Carbonsäure um Oxalsäure, Maleinsäure, Bernsteinsäure, Weinsäure, Zitronensäure oder Fumarsäure handelt.

6. Verfahren nach Ansprüchen 1 bis 5, dadurch gekennzeichnet, daß man das nach der Umsetzung vorliegende Reaktionsgemisch aufarbeitet, indem man nicht umgesetztes monomeres 2,2,4-Trimethyl-1,2-dihydrochinolin bei einem Druck im Bereich von 1000 bis 1 mbar und bei Sumpftemperaturen bis zu 220°C abdestilliert.

7. Verfahren nach Ansprüchen 1 bis 6, dadurch gekennzeichnet, daß man das nach der Umsetzung vorliegende Reaktionsgemisch aufarbeitet, indem man diesem ein aromatisches Lösungsmittel und Wasser zusetzt, nach intensiver Durchmischung die organische Phase abtrennt und daraus im Vakuum das aromatische Lösungsmittel und monomeres 2,2,4-Trimethyl-1,2-dihydrochinolin abtrennt.

## Claims

1. Process for the preparation of oligomeric 2,2,4-trimethyl-1,2-dihydroquinoline from monomeric 2,2,4-trimethyl-1,2-dihydroquinoline, characterized in that monomeric 2,2,4-trimethyl-1,2-dihydroquinoline (TMQ) is heated to 80 to 180°C with the addition of 0.01 to 10 % by weight of a polybasic aliphatic carboxylic acid (based on monomeric TMQ) and with the addition of 0.1 to 3 times the amount by weight of water (based on the polybasic aliphatic carboxylic acid).

2. Process according to Claim 1, characterized in that monomeric 2,2,4-trimethyl-1,2-dihydroquinoline is employed which has been obtained by reacting aniline with acetone in toluene as solvent and with addition of p-toluenesulphonic acid as catalyst at bottom temperatures of from 110 to 150°C, in which process aniline, toluene and the catalyst are initially introduced, the mixture is heated to refluxing of the toluene, acetone introduction is then commenced, the water of reaction forming after commencement of the reaction is removed by distillation as an azeotropic mixture with toluene, and the addition of acetone is continued at the rate at which it is consumed.

3. Process according to Claims 1 and 2, characterized in that the polybasic aliphatic carboxylic acid employed conforms to the formula (I)
HOOC-(-CR₁R₂-)ₙ-COOH (I),
in which
R₁ represents hydrogen or OH,
R₂ represents hydrogen or COOH and
n represents an integer of from 0 to 4.

4. Process according to Claims 1 and 2, characterized in that an unsaturated polybasic aliphatic carboxylic acid is employed.

5. Process according to Claims 1 to 4, characterized in that the polybasic aliphatic carboxylic acid is oxalic acid, maleic acid, succinic acid, tartaric acid, citric acid or fumaric acid.

6. Process according to Claims 1 to 5, characterized in that the reaction mixture present after the reaction is worked up by removing unreacted monomeric 2,2,4-trimethyl-1,2-dihydroquinoline by distillation at a pressure in the range from 1000 to 1 mbar and at bottom temperatures of up to 220°C.

7. Process according to Claims 1 to 6, characterized in that the reaction mixture present after the reaction is worked up by adding to it an aromatic solvent and water, separating off the organic phase after vigorous mixing, and removing therefrom the aromatic solvent and monomeric 2,2,4-trimethyl-1,2-dihydroquinoline in vacuo.

## Revendications

1. Procédé de préparation d'une 2,2,4-triméthyl-1,2-dihydroquinoléine oligomère à partir de la 2,2,4-triméthyl-1,2-dihydroquinoléine monomère, caractérisé en ce que l'on chauffe la 2,2,4-triméthyl-1,2-dihydroquinoléine monomère (TMQ) à des températures de 80 à 180°C en présence de 0,01 à 10 % en poids d'un acide carboxylique aliphatique polybasique (par rapport à la TMQ monomère) et en présence d'eau en quantité de 0,1 à 3 fois le poids de l'acide carboxylique aliphatique polybasique.

2. Procédé selon la revendication 1, caractérisé en ce que l'on met en oeuvre une 2,2,4-triméthyl-1,2-dihydroquinoléine monomère qui a été obtenue par réaction de l'aniline avec l'acétone dans le toluène qui sert de solvant et en présence d'acide p-toluène-sulfonique qui sert de catalyseur à des températures de liquide de 110 à 150°C, en partant d'un mélange de l'aniline, du toluène et du catalyseur, en chauffant ce mélange au reflux à l'ébullition du toluène, en commençant alors à introduire l'acétone, en distillant, après le déclenchement de la réaction, l'eau formée dans la réaction à l'état de mélange azéotropique avec le toluène et en poursuivant l'addition d'acétone au fur et à mesure de sa consommation.

3. Procédé selon les revendications 1 et 2, caractérisé en ce que l'acide carboxylique aliphatique polybasique mis en oeuvre répond à la formule I
HOOC-(-CR₁R₂-)ₙ-COOH (I)
dans laquelle
R₁ représente l'hydrogène ou un groupe OH,
R₂ représente l'hydrogène ou un groupe COOH et
n est un nombre entier allant de 0 à 4.

4. Procédé selon les revendications 1 et 2, caractérisé en ce que l'on utilise un acide carboxylique aliphatique polybasique insaturé.

5. Procédé selon les revendications 1 à 4, caractérisé en ce que l'acide carboxylique aliphatique polybasique consiste en acide oxalique, maléique, succinique, tartrique, citrique ou fumarique.

6. Procédé selon les revendications 1 à 5, caractérisé en ce que l'on traite le mélange obtenu après la réaction par distillation de la 2,2,4-triméthyl-1,2-dihydroquinoléine monomère non convertie sous une pression de 1000 à 1 mbar et à des températures de liquide allant jusqu'à 220°C.

7. Procédé selon les revendications 1 à 6, caractérisé en ce que l'on traite le mélange obtenu après la réaction en ajoutant un solvant aromatique et de l'eau, en mélangeant énergiquement, en séparant la phase organique et en isolant de celle-ci, sous vide, le solvant aromatique et la 2,2,4-triméthyl-1,2-dihydroquinoléine monomère.
